# EUROPEAN PATENT APPLICATION

(11) **EP 2 395 727 A1**
(43) Date of publication of application: **14.12.2011**
(21) Application number: 10305618.0
(22) Date of filing: 09.06.2010
(51) Int. Cl.: H04L 29/06, H04L 1/00

(54) **Data transport container, source device, destination device and method for transferring different types of data**

(71) Applicant: Thomson Licensing, 92130 Issy-les-Moulineaux (FR)
(72) Inventor: Li, Hui, 30539 Hannover (DE)
(74) Representative: Schäferjohann, Volker

(57) **Abstract**

The invention relates to a data transport container (91) for transferring at least two different types of source data in a high speed Internet Protocol network, the data transport container (91) being an Internet Protocol packet. The data transport container (91) comprises a succession of Internet Protocol multiplexing logical blocks (93), each logical block comprising a number of Internet Protocol physical packets corresponding to each type of data. Furthermore, the data transport container (91) contains Forward Error Correction (FEC) data. For each type of source data individual Forward Error Correction (FEC) data is contained in each Internet Protocol multiplexing logical block (93) corresponding to the source data transferred in that multiplexing logical block (93).

## Description

### Field of the Invention

The invention relates to a Data transport container for transferring at least two different types of source data in a high speed Internet Protocol network.

Furthermore, the invention also relates to a source device and to a destination device respectively for transferring and receiving such data transport containers. At last, the invention relates to a method for transferring different types of data being generated as Gigabit Ethernet RTP-UDP-IP jumbo packets. Both devices are to be used in a method as mentioned above.

### Background of the Invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Gigabit Ethernet (GigE) has rapidly gained prominence and acceptance as the new step in evolution of networks.

Relatively low-cost, high-speed, and interoperable with today's de facto standard, 100 Mbps Fast Ethernet, are just a few of GigE's promises. For many network planners, it is really only a matter of time before they adopt GigE.

Although Gigabit Ethernet is interoperable with 10/100 Mbps, there are some important differences that bear careful consideration. One of the most important is the absence of any standard Maximum Transmission Unit or MTU. The 1500 bytes standard MTU of 10 and 100 Mbps networks has been replaced with no standard at all. Packets on Gigabit Ethernet can be any size supported by network vendors, varying from 1500 bytes to over 16000 bytes. Vendors are constrained by the component manufacturers who typically limit largest supported frame size to around 9000 bytes.

While the benefits of so-called jumbo packets are significant: jumbo packets can more than double accessible bandwidth on today's networks compared to using smaller 1500 bytes packets, there are some hidden perils. Due to the lack of standard MTU values, MTU conflicts may hamper 100-Mbps-to-Gigabit transitions. For example, various forms of MTU conflict, such as black holes, can devastate network performance.

By sending oversize packets to an end-host and receiving messages back from intermediate interfaces, a transmitting host can discover the path MTU to a specific end-host, and adjust its traffic patterns accordingly. If not properly configured, or if messages are indiscriminately blocked on Layer 3 interfaces, necessary messages will not find their way to a source interface. These devices are referred to as black holes.

The term "jumbo" has typically been applied to any network unit (frame, packet, MTU) that is greater than the 10/100 Mbps Ethernet standard: at Layer 3 (packets and MTU), the standard size is 1500 bytes. Jumbo packets are one of the obvious differences between 100 Mbps and GigE. However, there is also a looming issue in that Gigabit Ethernet standard has no default Maximum Transmission Unit (MTU). MTU is a Layer 3 parameter that controls the maximum packet size allowed on the network. For 10 and 100 Mbps Ethernet, the standards (RFC 894, 895) clearly set the largest MTU to 1500 bytes and almost all Ethernet interface cards defaulted to it.

But, in current implementations, GigE data transfer performance is strongly dependent on MTU: recent studies have shown that jumbo packets permit most hosts to send data at much higher transfer rates than the smaller 1500 byte packets. In this context, there is a need to multiplex jumbo packets generated by different sources into RTP packets.

In the state of the art, it is well known to compact multi-packets into a single RTP packet, in order to reduce header overhead or to wrap multiple user data into a single RTP packet, in order to transfer multi-user data within a single RTP session. But, these existing RTP multiplexing methods are all based on standard packet RTP applications. They can't be used when different types of data, like video data, audio data, or metadata are transferred in Ethernet Jumbo packets.

Recent application, like for example, HiPerNet cameras can generate various output streams comprising data of different types, such as: DPX wrapped video, AIFF audio signal which maintains time relation with the video content, Intercom audio also presented as AIFF audio, where there is no time relation with the video content and at least, metadata. All these output streams are generated as Ethernet IP-UDP-RTP jumbo packets.

Furthermore, EP 2 099 191 A1 discloses a data transport container, which is an Internet Protocol packet and which comprises a succession of Internet Protocol multiplexing logical blocks, each logical block comprising a number of Internet Protocol physical packets corresponding to different types of data.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### Summary of the Invention

The technical problem that the present invention intends to solve is to transmit simultaneously data of different types generated as jumbo packets on a high-speed IP network allowing correction of data errors on a receiving side.

Thus, the present invention concerns, according to a first aspect, to a Data transport container for transferring at least two different types of source data in a high speed Internet Protocol network, the data transport container being an Internet Protocol packet. The transport container comprises a succession of Internet Protocol multiplexing logical blocks, each logical block comprising a number of Internet Protocol physical packets corresponding to each type of data. Additionally, the data transport container contains Forward Error Correction (FEC) data. For each type of source data individual Forward Error Correction (FEC) data is contained in each Internet Protocol multiplexing logical block corresponding to the source data transferred in that multiplexing logical block.

This means that for every kind of source data separate Forward Error Correction (FEC) data is transmitted in each container. This allows error correction on the receiving side separately for each kind of source data, which is desired for practical applications, in order to protect the data transport against lost IP packets. The term "Forward Error Correction" refers here to application/transport layer techniques for recovering lost packets of data.

According to another aspect of the invention, the Forward Error Correction (FEC) data is designed to protect one packet loss for each logical block of source data, which is under most conditions sufficient for correcting errors.

According to another aspect of the invention, systematic Forward Error Correction (FEC) data is used and wherein the original source data is transmitted uncompressed. This FEC data is gained by a deterministic algorithm. If error detection is required, a receiver can simply apply the same algorithm to the received data bits and compare its output with the received FEC data; if the values do not match, an error has occurred at some point during the transmission.

According to another aspect of the invention, Forward Error Correction (FEC) data is transmitted separately from the source data. This offers the advantage, that receivers without FEC ability can still apply the original source steam.

According to another aspect of the invention, the Forward Error Correction (FEC) data is an erasure code. An erasure code is a Forward Error Correction (FEC) code, which transforms a message of k symbols into a longer message (code word) with n symbols such that the original message can be recovered from a subset of the n symbols.

According to another aspect of the invention, the Forward Error Correction (FEC) data is designed to protect all elements of the Internet Protocol packets. Thus, also elements like a RTP header, a CSRC list, all RTP extension, media payload and padding (if any) are error protected.

According to another aspect of the invention, each data transport container aggregates a predefined number of Ethernet Jumbo packets depending on the type of data it comprises. Hence, the container offers high flexibility, especially if the source data of the different kinds have different data rates.

According to another aspect of the invention, the source data contains data of a first type, which is a DPX wrapped video content generated by a source, and data of a second type, which is an AIFF audio signal generated by the source, where the AIFF audio signal maintains a time relation with the video content. It may also contain data of a third type, which is an Intercom audio signal presented as an AIFF audio signal without any time relation with the video content, and data of a fourth type, which is Metadata.

The present invention concerns, according to another aspect, to a source device for sending a data transport container in a high speed Internet Protocol network, the data transport container comprising at least two types of data, each type of data being generated as Ethernet Jumbo packets, the source device including:
- means for aggregating a predefined number of Ethernet Jumbo packets comprising a unique type of data into an Internet Protocol physical packet of corresponding type;
- means for generating corresponding Forward Error Correction (FEC) data individually for each type of source data,
- means for combining together Internet Protocol physical packet corresponding to each type of data and corresponding Forward Error Correction (FEC) data into an Internet Protocol multiplexing logical block; and
- means for transmitting a stream comprising the Internet Protocol multiplexing logical blocks on the network.

The present invention concerns, according to yet another aspect, to a destination device for receiving a data transport container, the data transport container comprising at least two different types of data, each type of data being generated as Ethernet Jumbo packets, the destination device including:
characterized in that it includes:
   - means for receiving the streams; and
   - means for filtering the received streams in order to recover Ethernet Jumbo packets corresponding to each type of data and related Forward Error Correction (FEC) data.

The present invention concerns, according to another aspect, to a method for transferring at least two different types of data in a high speed Internet Protocol network, each type of data being generated as Ethernet Jumbo packets, including the steps of:
- aggregating a predefined number of Ethernet Jumbo packets comprising a unique type of data or Forward Error Correction (FEC) data, that is individually generated for the unique type of data, into an Internet Protocol physical packet of corresponding type;
- combining together Internet Protocol physical packets corresponding to each type of data and to related Forward Error Correction (FEC) data into an Internet Protocol multiplexing logical block;
- transmitting a stream comprising the Internet Protocol multiplexing logical blocks on the network;
- receiving the stream; and
- filtering the received stream in order to recover Ethernet Jumbo packets corresponding to each type of data and to related Forward Error Correction (FEC) data.

### Brief Description of the Drawings

Embodiments of the invention are described in text form hereinafter and are illustrated with drawings, which show in:
Fig. 1: Wrapping and multiplexing source data to data transport containers for transfer on a high-speed IP network;
Fig. 2: rough scheme of FEC data generation using a systematic code;
Fig. 3: an example of constructing FEC data from the header of an video data Jumbo packet;
Fig. 4: an example of constructing FEC data from the payload data of an video data Jumbo packet;
Fig. 5: an example of constructing FEC data from the audio data of an video data Jumbo packet;
Fig. 6: an example of a scheme of construction of FEC source symbol and source block data;
Fig. 7: an example of a structure of an Raptor FEC data logical block from video physical packets;
Fig. 8: an example of a structure of an Raptor FEC data logical block from audio physical packets; and
Fig. 9: an example of a construction of a data transport container with multiple physical packets of four kinds of source data being combined to IP logical blocks comprising FEC data;.

### Detailed Description of preferred Embodiments

Cameras for professional application generate following output streams as Ethernet IP-UDP-RTP jumbo packets:
DPX wrapped video;
AIFF audio, which maintains time relation with the video content;
Intercom audio, which is presented also as AIFF audio, where there is no time relation with the video content; and
Metadata packets (if applicable) generated by video camera.

The metadata stream may comprise metadata generated by the camera, or any external metadata (such metadata produced by any web server). These contents may be relevant to camera stream content and may be useful for post-editing.

There is a need to transmit all these data in a combined way and with error correction to distant device at high speed and with data enabling a receiver of correcting errors.

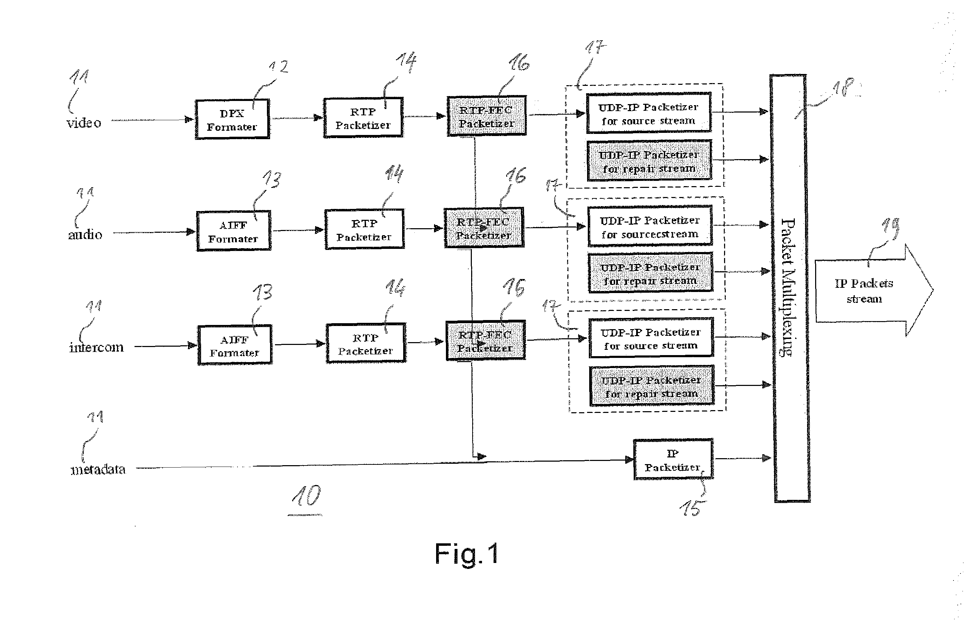

As shown in Fig.1, a source device 10 combines all different source streams 11 generated by the camera into packets at a sender side. In this example this applies to source data of four kinds, video, audio, intercom and metadata. Corresponding formatting blocks, namely DPX formatter 12, two AIFF formatters 13, one for audio data and the other for intercom data are provided. It could be that there is also a formatting block for the metadata but in the example of Fig.1 there is none. The formatted data will be packetized according to the real time transport protocol RTP in RTP packetizers 14. Additionally, individually for each of the source streams 11 except metadata, packets containing Forward Error Correction (FEC) data are added. For this task, corresponding RTP-FEC packetizers 16 are available. Subsequently, UDP-IP packetizing is done separately for source stream data and corresponding FEC data in blocks 17. Metadata will be directly packetized according to the IP protocol in IP packetizer 16.

All these packets are transmitted using a single physical IP transport link. As shown on Figure 1, a channel multiplexing is done on the IP packets layer in IP packet multiplexer 18. It means that all original IP-UDP-RTP packets generated by the different media are not changed. The max. buffer restriction for video stream is 150 ms. This means that total buffer requirement for processing multiplexed audio, intercom, metadata and associated FEC packets should not exceed it.

At a receiving side, which is not shown in the figures, a destination device filters the IP packets and switches them to associated stand-alone processing or storage devices as well as to an error correction device. An IP transport stream can be considered as a transport pipeline, the physical data flow in the pipeline has a single dimension. The process of interleaving the transport stream packets of more than one program into a single unified bit-stream, while maintaining timing synchronization of each program comprised within, is known as "IP multiplexing".

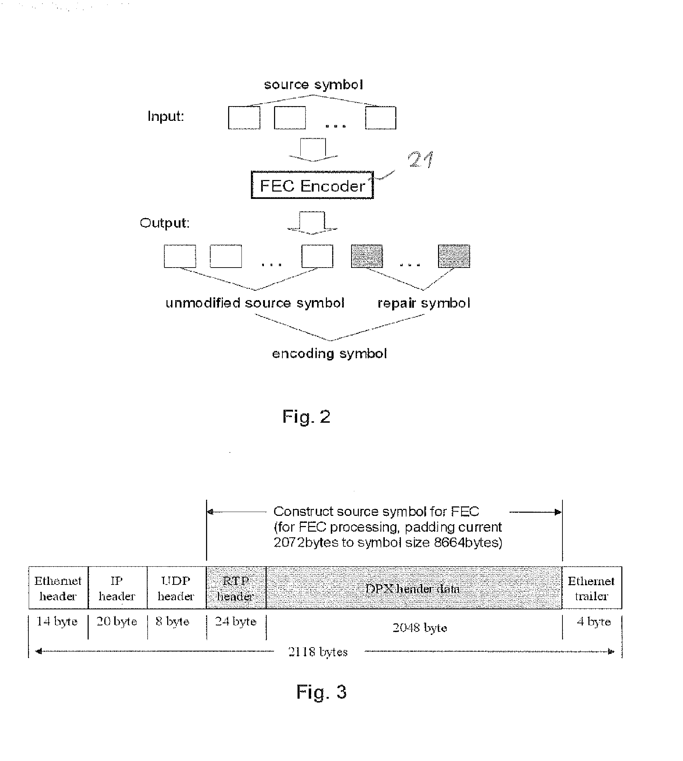

Fig.2 shows some schematics, in which to source data of Forward Error Correction (FEC) data is added, see FEC encoder 21. For practical application, it is desired to protect lost IP packets by Forward Error Correction. The term "Forward Error Correction" refers here to application/transport layer techniques for recovering lost packets of data. Thus, any packet loss for video, audio and intercom is protected. The metadata packet may be transferred repeatedly, if no packet loss protection for metadata packet is required.

In telecommunication, Forward Error Correction (FEC) is a system of error control for data transmission, whereby the sender adds redundant data to its messages, which allows the receiver to detect and correct errors (within some bound) without the need to ask the sender for additional data. The advantage of FEC is that retransmission of data can often be avoided, at the cost of higher bandwidth requirements on average, and is therefore applied in situations where retransmissions are relatively costly or impossible.

In general, FEC refers to the ability to overcome both erasures (losses) and bit-level corruption. However, for this application, the network layers will detect corrupted packets and discard them or the transport layers can use packet authentication to discard corrupted packets. Therefore, the primary application of FEC codes here is as an erasure code. The payloads are generated and processed using an FEC erasure encoder and objects are reassembled from reception of packets containing the generated encoding using the corresponding FEC erasure decoder.

FEC is accomplished by adding redundancy to the transmitted information using a predetermined algorithm. Each redundant bit is invariably a complex function of many original information bits, see Fig.2. FEC Encoding is done in FEC Encoder 21.

There are different kinds of FEC codes. For this application a Raptor code is chosen. Raptor code is the first known class of fountain codes with linear time encoding and decoding. There are no constraints on the source block size, and a single Raptor code can always be used to protect as much data as necessary. The raptor code is better suited for streaming application.

Raptor code refers to the particular set of media packets combined for using Raptor codec to generate FEC packet (s).

For using a Raptor codec, the task here is to design Raptor codes, in other words align source objects, source blocks, source symbols and their associated inputs parameters from an IP multiplexing stream 19.

Fig. 3 to 5 show the packet data structure of the different kinds of source data, which is formed into IP multiplexing logical blocks. For the application considered as example, data will be DPX data, AIFF data, Intercom data and metadata.

Fig. 3 to 5 show associated header and encapsulation data structure of Ethernet, IP and UDP format. As shown in these data structures, Ethernet header consists of 14 bytes, Ethernet trailer is 4 bytes, standard IP header is 20 bytes, UDP header is 8 bytes and RTP header is 24 bytes.

As specified in SMPTE 268M-2003, each DPX file comprises four sections. The first three sections are header information, the fourth comprises video data.

Fig.3 shows an IP multiplexing logical packet loaded with DPX header data of 2048 bytes.

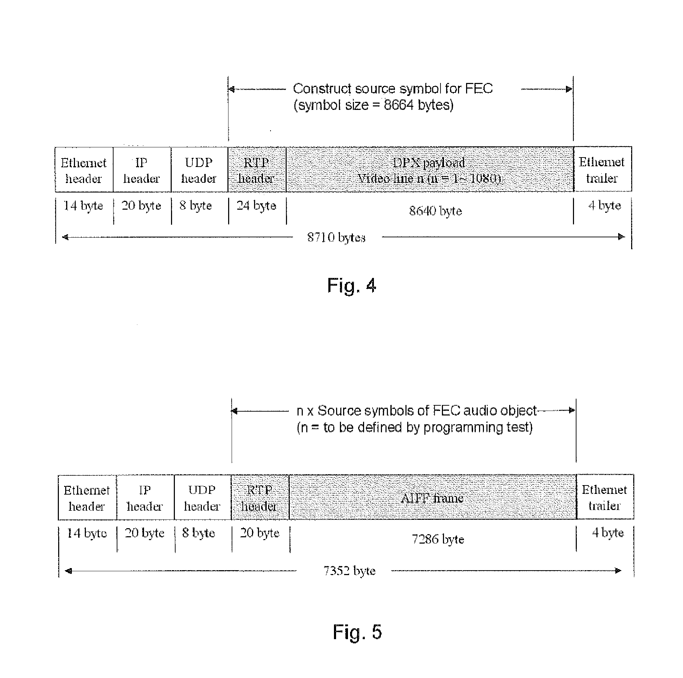

Fig.4 shows an IP multiplexing logical packet loaded with DPX payload (video data) of 8640 bytes.

Fig.5 shows an IP multiplexing logical packet loaded with an AIFF frame (audio data) of 7286 bytes.

For an easy filtering, the DPX header data is transferred with one separate multiplexing logical packet as shown in Fig. 3. The total size of a DPX header jumbo packet is 2118 bytes.

It is chosen to packetize each video line of the video frame into a single multiplexing physical packet as shown in Fig.4. Each video line is 1920*36 bits or 8640 bytes. The total size of a DPX video line multiplexing logical packet is 8710 bytes. According to above discussion, a DPX video frame will be transferred as 1081 Ethernet multiplexing physical packet (jumbo packets). A first transmitted multiplexing physical packet includes a DPX header payload (2118 bytes) and further 1080 transmitted multiplexing logical packets are DPX video line payload (each 8710 bytes).

The Audio Interchange File Format (AIFF) standard is used for storing the audio channels samples before wrapping them in RTP. An AIFF file comprises different types of chunks. Header content, the Common Chunk size and Audio Recording Chunk are predefined. Sound Data Chunk size depends on the size of transferred packet.

Three bytes are used for encoding one channel audio sample and six audio channels are applied, so a sample frame size is 18 bytes. The audio frequency is 48 kHz, the video rate is 24 frames-per-second. During one video frame, it will generate 2000 audio sample frames. If dividing these audio sample frames into 5 packets having each an equal size, each packet comprises 400 sample frames. Because the total audio sample frames during one video frame is 36 kbytes, the audio payload in each packet is equal to 7.2k bytes. According to the AIFF Form the Sound Data Chunk will be 7216 bytes and the total AIFF Form will be 7286 bytes. An AIFF chunk must start with a new RTP packet. Above described AIFF Form can be encapsulated with jumbo Ethernet packet (MTU 9018 bytes). The Ethernet IP-UDP-RTP-AIFF packet structure is shown in Fig.5. The total packet size is 7352 bytes.

In Fig.3 to 5 for each IP logical packet is indicated, which parts of the packets are used to generate related Forward Error Correction (FEC) data. The three examples show that the data load (DPX header, DPX payload, AIFF frame) and the related RTP header is used to generate the related FEC data.

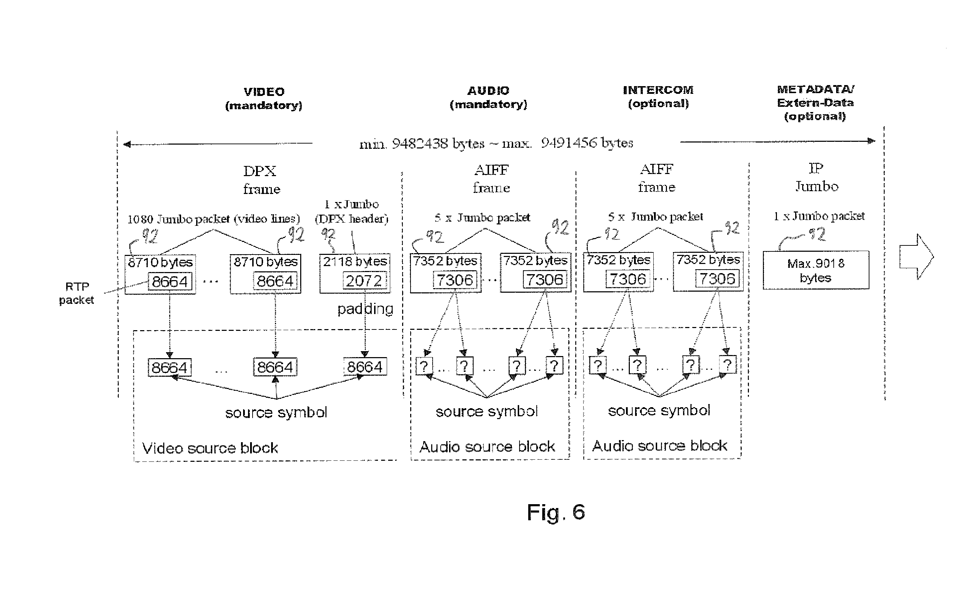

Fig. 6 shows a detailed structure of a multiplexing logical block in the transport stream. Figure 6 also shows, from which data source symbols the FEC data are generated.

Fig. 6 shows how the FEC's source symbols are derived from its Audio/Video packets (here RTP packets). FEC packets (repair symbols) are generated from associated FEC's source symbols. The construction of FEC's source symbols is application dependent. The size and number of each FEC's source symbol need not always be the same as its original Audio/Video packet (here RTP packet), although they must have the same data bytes and total size. In this example, the FEC's source symbol for video are just the same as the Video RTP packet. But the FEC's source symbol for Audio and Intercom should not have the same size and number as their associated Audio-AIFF RTP packet. There can be plenty of different partitions used for audio and intercom data, see explanation hereinafter.

The first multiplexing block in the data container is the metadata part: it is a jumbo IP metadata packet 92. Its maximal size is 9KB. The payload of metadata part can be any internally and externally generated metadata. If a big metadata section cannot be completely loaded in a single jumbo packet 92, the metadata may be split and loaded into the metadata packet of the next multiplexing block. In the multiplexing block, the metadata packet is optional. If no metadata is presented, the metadata packet is omitted.

For Metadata no FEC data is generated and transmitted.

The second and third multiplexing blocks in the data container are intercom and audio parts.

Intercom part is constituted with 5 intercom packets and audio part is constituted with 5 audio packets. Intercom and audio packets are both jumbo Ethernet IP packets 92. They are 7352 bytes with AIFF payload. The intercom packets are optional and the audio packets are mandatory.

From the jumbo packets 92 of intercom data and of audio data, source symbols of FEC data are formed separately for both kinds of data. The number of source symbols and size of each source symbol are decided according to practical usages. The more packets are input to the FEC Encoder, the better. The FEC Raptor code belongs to the type of "fountain codes" and requires continuous input of packets to work successively. Therefore a partition of the jumbo frames 92 for audio packets is preferred.

In the fourth multiplexing block (video part), 1081 jumbo video packets are formed. For a group of packets with DPX payload and of a packet with the DPX header a source symbol of related FEC data is generated and formed.

From the physical packets carrying audio or intercom data physical packets (source symbols) for constructing FEC data are generated, the number and size of each source symbol is decided by practical usages, see above. From the physical packets carrying video data physical packets (source symbols) for constructing FEC data are generated, each carrying 8664 bytes of FEC data.

The "question marks" in the source symbols of Fig. 6 indicate that the size and number of source symbols for generation of Audio and Intercom FEC packets are "to be defined" according to practical audio usages.

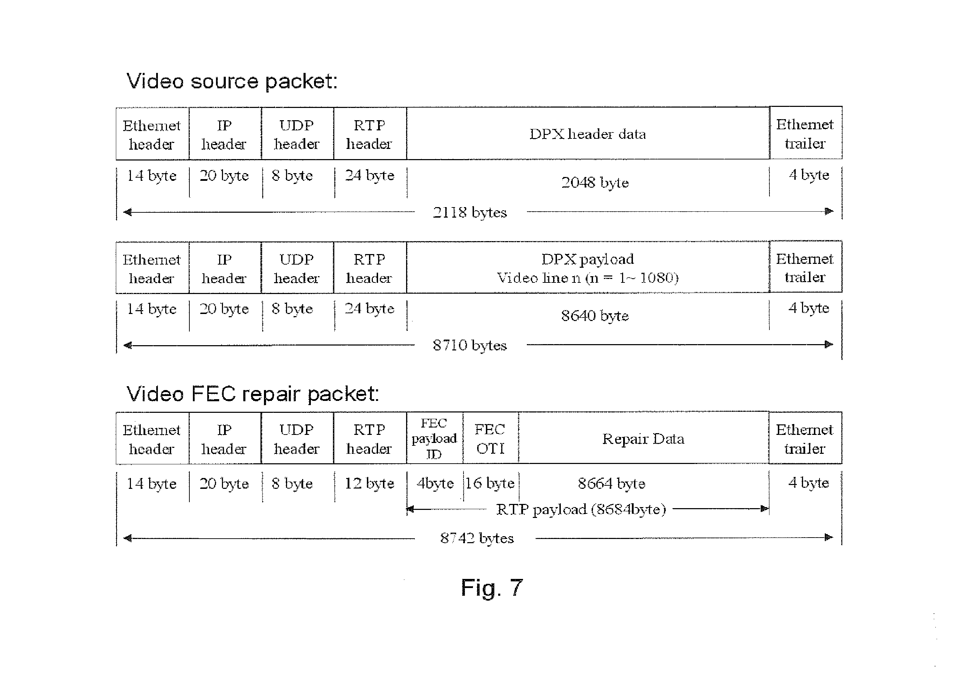

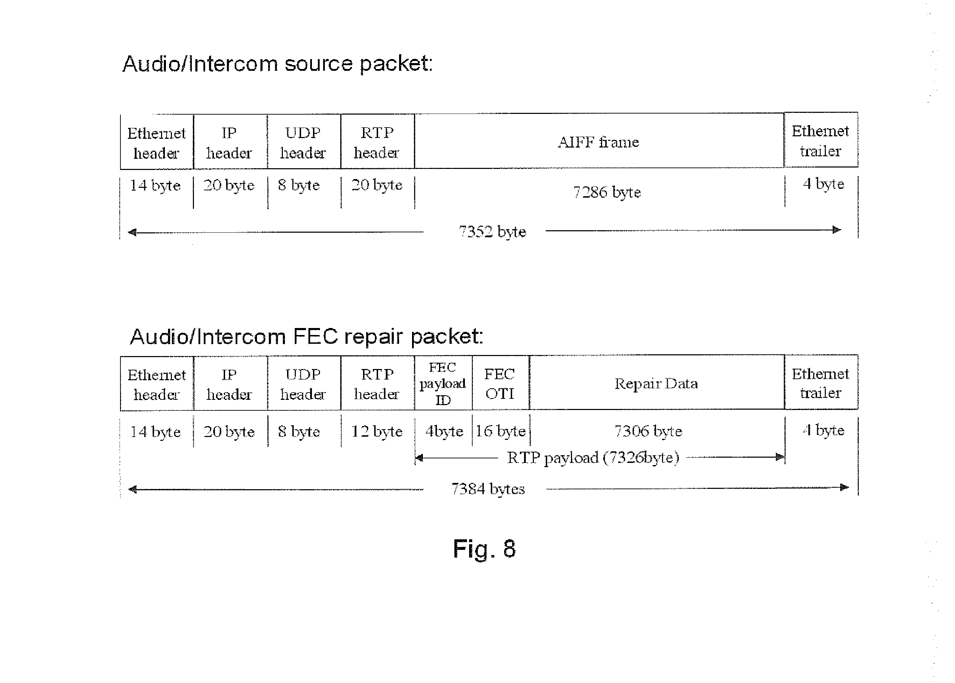

This is further demonstrated in Fig.7 and 8.

Fig.7 shows one physical packet of 2118 bytes with header data and 2048 bytes of DPX header data as already explained above. Further it shows a physical packet of DPX payload (video data) and the related header data.

From each packet of DPX payload or of DPX header data a video FEC repair packet with repair data, which is Forward Error Correction data, is formed. Each FEC data packet carries 8664 byte of FEC data.

Fig.8 shows that in the same manner audio/intercom packets are formed, which carry 7306 FEC data each. This data is gained from audio data of 5 audio or intercom packets, each of these carrying 7286 bytes of audio data.

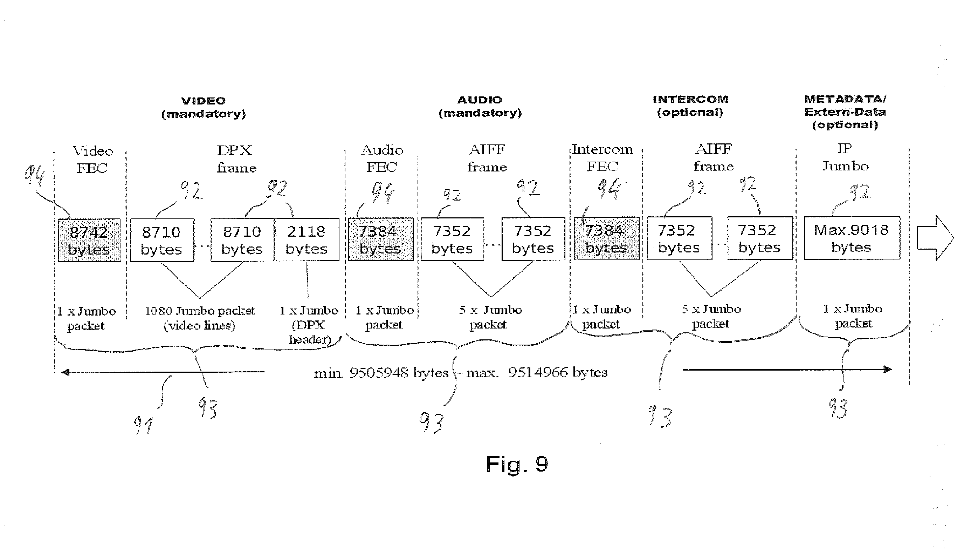

Fig.9 shows the final IP multiplexing layout of a data transport container 91 according to the invention.

In this data transport container 91, packets which are presented as IP packets are multiplexed into an Ethernet IP transport stream 19. The IP transport stream 19 consists of a series of multiplexing logical blocks 93 being an aggregation of minimal transport units of a group of source packets, namely video Minimal Multiplexing Unit (MMU), audio MMU, intercom MMU and metadata/external data MMU. For video, audio and intercom also physical packets with FEC data are multiplexed. Each source signal MMU is the minimal transportable and retrievable packet of the source stream. Each MMU is designed according to its source signal format requirement.

Fig.9 shows a data container 91 with four IP logical blocks 93, i.e. a metadata logical block, an intercom logical block, an audio logical and a video logical block.

The metadata logical block consists of one multiplexing packet, which is a jumbo packet 92 and which carries 9018 bytes of metadata at maximum. For the metadata, no FEC data is generated and multiplexed.

The next logical block 93 is the intercom block carrying intercom data, which is packetized in 5 jumbo packets 92, each carrying 7352 bytes, which include header data and payload data. Additionally, this logical block has a repair packet 94 of 7384 bytes with FEC data generated from the intercom data of the 5 jumbo blocks.

The audio logical block consists of 5 jumbo packets, each one having 7352 bytes of a header and audio data. From the audio data of these five blocks, FEC data has been generated which is transmitted in a further repair packet 94 of the audio logical block carrying 7384 bytes of FEC data and header data.

The video logical block consists of 1080 jumbo packets 92, each one having 7352 bytes of a header and video data, and of a packet with 2118 bytes of DPX header data. From the video data of these 1080 blocks (one video frame) and of the packet with DPX header data, FEC data has been generated which is transmitted in a further repair packet 94 of the video logical block, this packet carrying 8742 bytes of FEC data and header data.

Note that Fig.9 shows associated FEC packets 94, while Fig.6 demonstrates the construction (allocation) of the source symbols for generating FEC packet(s). An FEC packet 94, which includes FEC repair symbols, is generated from FEC's source symbols. Fig.6 shows an IP multiplexing without FEC packets, but with the possible construction of FEC's source symbols. Fig.9 shows an IP multiplexing stream 19 with FEC packets 94. The FEC packets 94 in Fig.9 are the results generated from these source symbols (or source block) in Fig.6.

References disclosed in the description, the claims and the drawings may be provided independently or in any appropriate combination. Features may, where appropriate, be implemented in hardware, software, or a combination of the two. Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Data transport container for transferring at least two different types of source data in a high speed Internet Protocol network, wherein the data transport container (91) is an Internet Protocol packet, which comprises a succession of Internet Protocol multiplexing logical blocks, each logical block comprising a number of Internet Protocol physical packets corresponding to each type of data, **characterized in that** the data transport container (91) also contains Forward Error Correction (FEC) data and that for each type of source data individual Forward Error Correction (FEC) data is contained in each Internet Protocol multiplexing logical block (93) corresponding to the source data transferred **in that** multiplexing logical block.

2. Data transport container according to claim 1, wherein the Forward Error Correction (FEC) data is designed to protect one packet loss for each logical block (93) of source data.

3. Data transport container according to claim 1 or 2, wherein systematic Forward Error Correction (FEC) data is used and wherein the original source data is transmitted uncompressed.

4. Data transport container according to one of claims 1 to 3, wherein Forward Error Correction (FEC) data is transmitted separately from the source data.

5. Data transport container according to one of claims 1 to 4, wherein the Forward Error Correction (FEC) data is an erasure code.

6. Data transport container according to one of claims 1 to 5, wherein the Forward Error Correction (FEC) data is designed to protect all elements of the Internet Protocol packets.

7. Data transport container according to one of claims 1 to 6, wherein each data transport container (91) aggregates a predefined number of Ethernet Jumbo packets (92) depending on the type of data it comprises.

8. Data transport container according to one of claims 1 to 7, wherein the source data contains data of a first type, which is a DPX wrapped video content generated by a source, and data of a second type, which is an AIFF audio signal generated by the source, where the AIFF audio signal maintains a time relation with the video content.

9. Data transport container according to claim 7, wherein the source data contains data of a third type, which is an Intercom audio signal presented as an AIFF audio signal without any time relation with the video content, and data of a fourth type, which is Metadata.

10. Data transport container according to claims 7 and 8, wherein among the aggregated jumbo packets (92) corresponding to the first type of data, one jumbo packet comprises a DPX header.

11. Source device for sending a data transport container (91) according to one of the claims 1 to 10 in a high speed Internet Protocol network, the data transport container (91) comprising at least two types of data, each type of data being generated as Ethernet Jumbo packets (92),
the source device including:
- means for aggregating a predefined number of Ethernet Jumbo packets (92) comprising a unique type of data into an Internet Protocol physical packet of corresponding type;
- means for generating corresponding Forward Error Correction (FEC) data individually for each type of source data,
- means for combining together Internet Protocol physical packet corresponding to each type of data and corresponding Forward Error Correction (FEC) data into an Internet Protocol multiplexing logical block; and
- means for transmitting a stream (19) comprising the Internet Protocol multiplexing logical blocks (93) on the network.

12. Destination device for receiving a data transport container (91) according to one of the claims 1 to 10, the data transport container (91) comprising at least two different types of data, each type of data being generated as Ethernet Jumbo packets (92),
the destination device being **characterized in that** it includes:
- means for receiving the streams (11); and
- means for filtering the received streams (11) in order to recover Ethernet Jumbo packets (92) corresponding to each type of data and related Forward Error Correction (FEC) data.

13. Method for transferring at least two different types of data in a high speed Internet Protocol network, each type of data being generated as Ethernet Jumbo packets (92), including the steps of:
- aggregating a predefined number of Ethernet Jumbo packets (92) comprising a unique type of data or Forward Error Correction (FEC) data, that is individually generated for the unique type of data, into an Internet Protocol physical packet of corresponding type;
- combining together Internet Protocol physical packets corresponding to each type of data and to related Forward Error Correction (FEC) data into an Internet Protocol multiplexing logical block (93);
- transmitting a packet multiplexed stream (19) containing the Internet Protocol multiplexing logical blocks (93) on the network;
- receiving the stream (19); and
- filtering the received stream (19) in order to recover Ethernet Jumbo packets (92) corresponding to each type of data and to related Forward Error Correction (FEC) data.

14. The method according to claim 13, wherein data of a first type is a DPX wrapped video content generated by a source and data of a second type is an AIFF audio signal generated by the source, where the AIFF audio signal maintains a time relation with the video content.

15. The method according to one of claims 13 or 14, wherein data of a third type is an Intercom audio signal presented as an AIFF audio signal without any time relation with the video content and wherein data of a fourth type is Metadata.
